Europäisches Patentamt

European Patent Office

Office européen des brevets

(19)

(11) Veröffentlichungsnummer: **0 050 243 B1**

# EUROPÄISCHE PATENTSCHRIFT

(12)

(45) Veröffentlichungstag der Patentschrift: **11.12.91**

(51) Int. Cl.⁵: **B60H 3/06**, B01D 53/02, B01D 53/36

(21) Anmeldenummer: **81107768.4**

(22) Anmeldetag: **30.09.81**

(54) Verfahren und Vorrichtung zur Reinigung von mit Schadstoffen belasteter Luft.

(30) Priorität: 17.10.80 DE 3039238
11.11.80 DE 3042455
31.01.81 DE 3103302
31.01.81 DE 3103303
09.07.81 DE 3127129

(43) Veröffentlichungstag der Anmeldung:
28.04.82 Patentblatt 82/17

(45) Bekanntmachung des Hinweises auf die
Patenterteilung:
11.12.91 Patentblatt 91/50

(84) Benannte Vertragsstaaten:
AT CH FR GB IT LI NL SE

(56) Entgegenhaltungen:
EP-A- 0 033 784
DE-A- 2 416 805
DE-A- 2 603 750
DE-A- 2 908 085
DE-A- 2 911 428

Drägerheft, April-Juni 1971, Nr. 284

Prospekt Nr. 2712.3 des Drägerwerks AG,
Lübeck, 1. Ausgabe Sept. 1970

(73) Patentinhaber: **Hölter, Heinz, Dipl.-Ing.**
**Beisenstrasse 39-41**
**W-4390 Gladbeck(DE)**

(72) Erfinder: **Hölter, Heinz, Dipl.-Ing.**
**Beisenstrasse 39-41**
**W-4390 Gladbeck(DE)**
Erfinder: **Igelbüscher, Heinrich, Ing. grad.**
**Marcq-en-Baroeul-Strasse 60**
**W-4390 Gladbeck(DE)**
Erfinder: **Gresch, Heinrich, Ing. grad.**
**Franz Lehàr-Strasse 25**
**W-4600 Dortmund-Wickede(DE)**
Erfinder: **Dewert, Heribert, Ing. grad.**
**Bahnhofstrasse 23**
**W-4390 Gladbeck(DE)**

(74) Vertreter: **Spalthoff, Adolf, Dipl.-Ing.**
**Pelmanstrasse 31 Postfach 34 02 20**
**W-4300 Essen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf eine Vorrichtung zur Reinigung von mit Schadstoffen belasteter Luft, in deren Gehäuse verschiedene Filterschichten und andere der Bearbeitung des Luftstroms dienende Stufen angeordnet sind. Diese Vorrichtung soll vorzugsweise dazu dienen, Luft für Kabinen od.dgl. geschlossene Räume aufzubereiten, die dem Aufenthalt von Personen dienen.

Es ist bekannt, einem Luftstrom mittels Sorptions- und Katalysatorfilterschichten Schadstoffe zu entziehen. Sorptionsmassen werden in ihrer Aufnahmefähigkeit sehr stark vom Wasserdampfpartialdruck beeinflußt, und zwar dahingehend, daß beispielsweise Aktivkohle bei einer relativen Luftfeuchtigkeit ab 50 % bei schwerwasserlöslichen Stoffen in ihrer Sorptionsfähigkeit um ein Vielfaches absinkt. Weiterhin geht die Sorptionsfähigkeit aber auch mit steigender Temperatur, beispielsweise oberhalb von 40 - 50 Grad C, sehr stark zurück, so daß in diesem Bereich zurückgehaltene Schadstoffe teilweise schon wieder freigesetzt werden.

Katalysatormassen werden schon bei sehr geringen relativen Luftfeuchtigkeiten unbrauchbar. Um Katalysatormassen, beispielsweise Hopkalit, gegen Feuchtigkeitsumschlag zu schützen, müssen diese aufgeheizt oder durch eine vorgeschaltete Trocknungsschicht geschützt werden.

Die EP-0 033 784-A2, welche einen gemäß EPÜ Art. 54 (3) zu berücksichtigenden Stand der Technik bildet, hat sowohl ein Verfahren als auch eine Vorrichtung zur Reinigung der einer Arbeitsschutz- oder Fahrzeugkabine zugeführten Luft zum Gegenstand. Bei einem Ausführungsbeispiel findet ein aus Sorptionsmassen und diesen in Strömungsrichtung nachgeordneten Katalysatormassen bestehendes Gasfilter Verwendung, wobei vor den Katalysatormassen eine Aufheizstufe vorgesehen ist. Die angesaugte, von Schadstoffen zu befreiende Luft wird mit ihrer vorhandenen Temperatur durch die Chemisorptionsmassen geführt und erfährt dann eine Erwärmung, bevor diese die Katalysatormassen durchströmt. Hinter den Katalysatormassen wird die Luft gekühlt.

Durch die Literaturstelle "DRÄGERHEFT", Nr. 284 (April - Juni 1971), S. 8, ist ein Kohlenoxidfilter bekannt. Das Kohlenoxid wird mittels des Filters durch den Luftsauerstoff zu Kohlendioxid oxidiert. Die Gebrauchszeit eines derartigen Kohlenoxidfilters wird nicht nur durch die Menge des aus der Luft zu entfernenden Kohlenoxids bestimmt, sondern auch durch die Menge der mit der Luft zugeführten Feuchtigkeit. Um die Gebrauchszeit zu verlängern wird daher vorgeschlagen, ein Trocknungsmittel, wie z.B. Calciumchlorid, im Filter vor dem Katalysator anzuordnen. Da die Gebrauchszeit des Kohlenoxidfilters außer durch Wasserdampf auch noch durch andere Stoffe, vor allem Schwefeldioxid, Chlor und Chlorwasserstoff, beeinflußt wird, wird weiterhin vorgeschlagen, vor den Kohlenoxidfilter ein Aktivkohlefilter mit geeigneter Imprägnierung zur Entfernung der Katalysatorgifte zu schalten. Zum Schutz vor Wasserdampf wird außerdem empfohlen, den Katalysator selbst auf über 80 Grad C zu erhitzen.

Auf Seite 2, dieser Literaturstelle ist weiterhin ein Kohlenoxidfilter dargestellt und beschrieben, bei dem anstelle mit Hilfe eines Trocknungsmittels die relative Luftfeuchtigkeit des Luftstroms durch Erwärmung soweit erniedrigt wird, daß sie für den Katalysator nicht mehr schädlich ist. Zu diesem Zweck ist eine elektrische Heizeinrichtung vorgesehen, welche den Luftstrom auf 80 Grad C erwärmt. Die aus dem Filter austretende, von CO gereinigte Luft wird anschließend auf eine zumutbare Temperatur heruntergekühlt.

Aus dem Prospekt 2712.3 der DRÄGERWERKE AG, 1. Ausgabe, Sept. 1970, ist eine weitere Ausführung eines Kohlenoxidfilters bekannt, bei dem der Filter vor dem Katalysator eine elektrische Heizeinrichtung aufweist, um die eintretende Zuluft auf etwa 80 Grad C zu erwärmen. Anschließend findet eine Abkühlung der gereinigten Luft statt. Dem Kohlenoxidfilter ist ein Gasvorfilter auf Aktivkohlebasis vorgeschaltet, in dem auch andere Schadstoffe abgeschieden und vor allem Katalysatorgifte zurückgehalten werden sollen.

Durch die DE-OS 26 03 750 ist eine Belüftungsvorrichtung für Personenfahrzeuge bekannt, bei welcher die Zuluft über einen Grobstaubfilter geführt und über die Wärmeseite einer Peltier-Batterie geleitet wird, von welcher die Luft in ein Feinfilter sowie ein Schwebstofffilter gelangt, aus welchen diese in ein Mehrschichtengasfilter eintritt. Nach Durchströmen dieses Mehrschichtengasfilters wird die Luft über die kalte Seite der Peltier-Batterie geführt und über einen Hauptventilator verteilt.

Die DE-OS 29 08 085 hat ein Filter für die Frischluftzufuhr für Autokabinen zum Gegenstand, welches aus mehreren Schichten besteht. In Strömungsrichtung der zu reinigenden Luft gesehen ist zunächst eine Schicht aus Calciumchlorid vorgesehen, dann eine Aktivkohleschicht, eine Natronkalkschicht, wobei letzterer eine Katalysatorschicht nachgeordnet ist, nach deren Durchströmen die Luft aus einem Ausblasstutzen wieder austritt.

Es hat sich herausgestellt, daß keine der vorstehend geschilderten Filtervorrichtungen in der Lage ist, die in einem Fahrzeuginnenraum vorhandene bzw. eintretende Luft in wirtschaftlicher Weise weitgehend schadstofffrei zu halten.

Von diesem Stand der Technik ausgehend liegt der Erfindung die Aufgabe zugrunde, eine Vorrichtung zur Reinigung von mit Schadstoffen belasteter Luft zu schaffen, deren Sorptions- und Katalysatorfilterschichten eine bessere Beseitigung der Schadstoffe aus der zu reinigenden Luft ermöglichen und zugleich hohe Standzeiten erreichen. Diese Aufgabe wird durch eine Vorrichtung zur Reinigung von mit Schadstoffen belasteter Luft gelöst, welche in einem Gehäuse in der angegebenen Reihenfolge in Strömungsrichtung der Luft gesehen folgende Filterschichten bzw. Stufen aufweist:

    a) eine erste Natronkalkschicht,
    b) eine erste Katalysatorschicht zur partiellen Oxidation von Stickoxiden,
    c) eine zweite Natronkalkschicht,
    d) eine Sorptionsschicht aus Aktivkohle,
    e) eine Lufterwärmungszone,
    f) eine zweite Katalysatorschicht zur Wandlung von CO zu $CO_2$, und
    g) eine Luftkühlzone.

Der von Schadstoffen zu befreiende Luftstrom wird zuerst über die erste Natronkalkschicht geleitet, in der $SO_2$, $SO_3$ und $NO_3$ abgeschieden werden. Dahinter ist eine erste Katalysatorschicht angeordnet, vorzugsweise bestehend aus Hopkalit, in der das von der Natronkalkschicht nicht absorbierte NO in $NO_2$ gewandelt wird. Hinter der ersten Katalysatorschicht ist eine zweite Natronkalkschicht angeordnet, in der dem Luftstrom einerseits wieder Feuchtigkeit und andererseits noch in ihm vorhandene saure Schadstoffe, z.B. das in der ersten Katalysatorschicht entstandene $NO_2$, entzogen werden. In der als Chemisorptionsschicht dienenden Aktivkohleschicht werden dann im wesentlichen Kohlenwasserstoffverbindungen aus dem Luftstrom abgeschieden.

Hinter der Aktivkohleschicht liegt eine zweite Katalysatorschicht, in der CO in $CO_2$ gewandelt wird. Vor dem Durchfliessen der zweiten Katalysatorschicht, die vorzugsweise ebenfalls aus Hopkalit besteht, wird der Luftstrom erwärmt, so daß das im Luftstrom vorhandene CO zu $CO_2$ gewandelt wird, ohne daß die zweite Katalysatorschicht mit Feuchtigkeit beaufschlagt würde. Hinter der zweiten Katalysatorschicht wird der Luftstrom auf eine gewünschte Temperatur gekühlt.

Es hat sich gezeigt, daß durch den erfindungsgemäßen Aufbau eine weitgehende Reinigung von mit Schadstoffen belasteter Luft erreicht wird, und zwar hinsichtlich einer großen Vielzahl der auftretenden Schadstoffe.

Vorteilhaft wird an die Luftzuführung der Vorrichtung ein Ozonisator zur Zuführung ozonisierter Luft angeschlossen, oder aber der Ozonisiator ist unmittelbar in der Luftzuführung zur Ozonisierung der schadstoffbelasteten Luft selbst angeordnet. Hierdurch wird die Standzeit der Filtervorrichtung wesentlich verbessert, da die von Schadstoffen zu befreiende Luft vor der Durchströmung der Filterschichten der Vorrichtung bereits ozonisiert wird, wodurch bereits vor den Filterschichten eine Aufoxidierung stattfindet. Diese Ozonisierung erfolgt in der Anströmphase vor der ersten Natronkalkschicht über elektrische Spannung. Durch diese Ausführung kann bei sehr hohem NO-Gehalt der Luft, z.B. bei Abgasbelastungen hinter Fahrzeugmotoren, wo kaum Sekundärluftverdünnungseffekte für den Einatmenden auftreten, die oben beschriebene erste Katalysatorschicht, die aus Hopkalit bestehen kann, nur als Feinst-Katalysator Anwendung finden, so daß hier bereits auch CO in $CO_2$ gewandelt wird.

Die Lufterwärmungs- und die Luftkühlzone können vorteilhaft durch eine mehrere Peltierelemente aufweisende Peltiervorrichtung ausgebildet werden, wobei die Peltierelemente mit Rippen ausgerüstet sein können, an denen die zu erwärmende bzw. abzukühlende Luft zwangsläufig vorbeigeführt wird. Der Luftstrom kann so geleitet werden, daß er nacheinander über die Heißseiten der Peltierelemente und im Gegenstrom über deren Kühlseiten geführt wird. Durch diese Ausgestaltung wird erreicht, daß der wärmsten Heißseite der Peltiervorrichtung die vergleichsweise wärmste Kaltseite desselben Peltierelements gegenüberliegt, so daß die für jedes einzelne Peltierelement zu überwindende Temperaturdifferenz auf ein Minimum reduziert ist. Dies hat zur Folge, daß die Peltierelemente in ihrem optimalen Betriebsbereich arbeiten können. Hierdurch lassen sich etwa 70 % der elektrischen Leistung als Heiz- bzw. Kühlleistung nutzen.

Vorteilhaft befinden sich die Peltierelemente in einem gemeinsamen Gehäuse, so daß sich insgesamt eine kompakte und einfach herstellbare Anordnung ergibt. Das Gehäuse ist mit Rippen od.dgl. versehen, so daß der Wärme- bzw. Kälteübergang verbessert wird.

Nach einem weiteren Vorschlag der Erfindung ist das Gehäuse mit Umleitvorrichtungen od.dgl. ausgerüstet, so daß auch eine partielle Erwärmung oder Abkühlung des darüber- oder hindurchgeführten Luftstroms möglich ist.

Vorteilhaft ist die Eingangsseite der erfindugnsgemäßen Vorrichtung im Innenraum eines Fahrzeugs angeordnet, so daß veränderliche klimatische Bedingungen außerhalb des Fahrzeugs nicht negativ wirksam werden. Diese Ausführung hat den Vorteil, daß ein Fahrer keinen unterschiedlichen klimatischen Beanspruchungen ausgesetzt ist, wobei nur die für den Atembereich des Fahrers notwendige Luftmenge gereinigt werden muß. Die Vorrichtung kann demgemäß klein und preiswert sein.

Die Erfindung wird nunmehr an Hand von Ausführungsbeispielen unter Bezugnahme auf die Zeichnung näher erläutert.

Es zeigen:

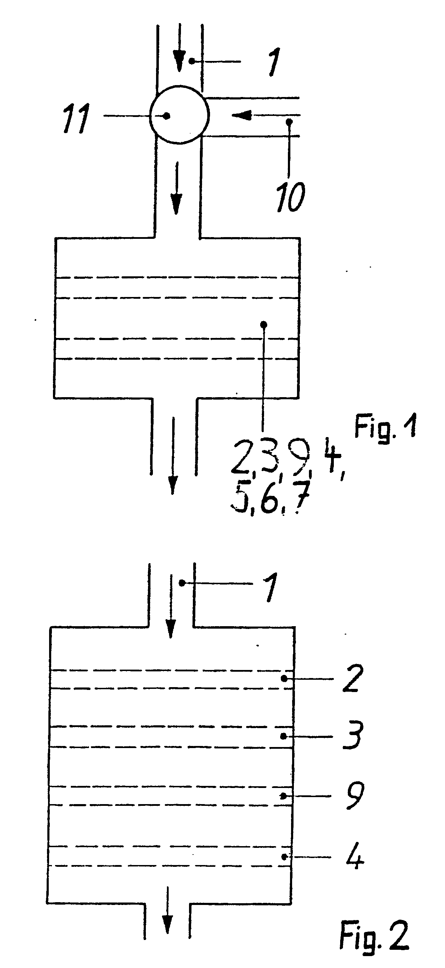

    Figur 1    eine schematische Darstellung der erfindungsgemäßen Vorrichtung;

    Figur 2    eine Darstellung der ersten vier Schichten der Vorrichtung aus Figur 1;

Figur 3 die Seitenansicht eines Großfahrzeugs mit Fahrerkabine und

Figur 4 eine Ansicht eines Ausführungsbeispiels der Lufterwärmungs- und Luftkühlzone.

Bei der in den Figuren dargestellten Vorrichtung zur Reinigung von mit Schadstoffen belasteter Luft wird der z.B. CO-, $SO_2$-, $NO_2$-, NO- und CH-Verbindungen enthaltende Luftstrom 1 zuerst durch eine erste Natronkalkschicht 2 und dann durch eine erste Katalysatorschicht 3, z.B. aus Hopkalit oder einem Ozonisierungsmittel, geleitet. Danach durchströmt der Luftstrom 1 eine zweite Natronkalkschicht 9, die zur Aufnahme saurer Schadstoffe einer Aktivkohleschicht 4 vorgeschaltet ist. In einer dahinter angeordneten Lufterwärmungszone 5 findet eine Erwärmung des Luftstroms 1 statt, nach der der Luftstrom 1 eine als Hopkalitschicht ausgebildete zweite Katalysatorschicht 6 durchströmt. Hinter der zweiten Katalysatorschicht 6 ist eine Luftkühlzone 7 angeordnet, über die dann der gereinigte Luftstrom 1 einer Arbeitsschutzkabine od.dgl. zugeführt wird.

Vor den eigentlichen Filterschichten der Vorrichtung wird dem Luftstrom 1 ozonisierte Luft 10 zugeführt, so daß die Aufoxidierung der Schadstoffe erleichtert ist. Die ozonisierte Luft 10 wird dem Luftstrom 1 durch eine Zuleitung zugesetzt; oder die Ozonisierung des Luftstroms 1 erfolgt direkt über einen Ozonisator 11, wobei die Ozonisierung elektrisch durchgeführt wird. Der Ozonisator 11 kann außer vor auch zwischen den Filterschichten eingesetzt sein; die zu $NO_2$, $CO_2$ aufoxidierten Schadstoffe werden mit dem Luftstrom 1 vor Durchfließen der zweiten Katalysatorschicht 6 in der Lufterwärmungszone 5 aufgeheizt, so daß die als Hopkalitschicht ausgebildete zweite Katalysatorschicht 6 nicht so feucht wird, daß sie als Katalysator unbrauchbar würde; der gereinigte und erwärmte Luftstrom 1 wird über die Luftkühlzone 7 auf die gewünschte Atem- oder Raumluft-Temperatur heruntergekühlt. Als Heiz- und Kühlaggregat dient vorzugsweise ein Peltierelement.

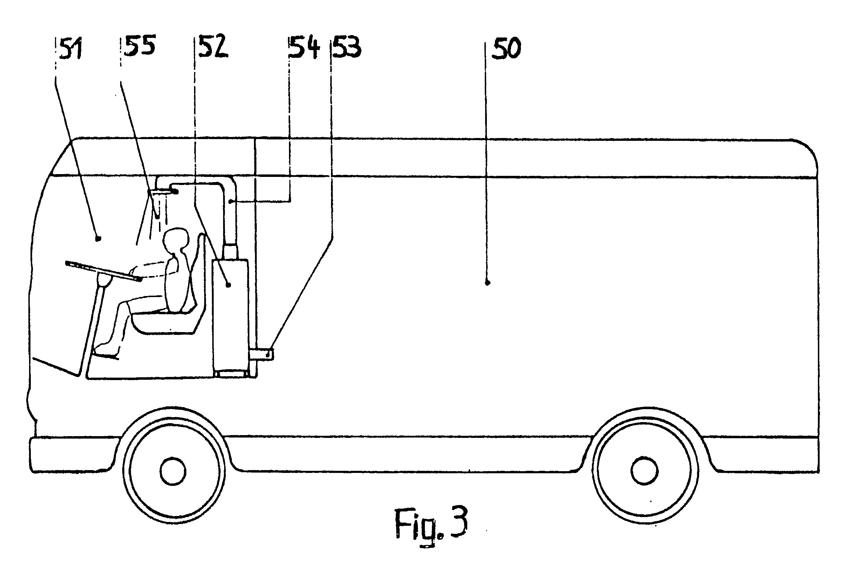

In Figur 3 ist ein Großfahrzeug (LKW oder Bus) mit Fahrerkabine 51 dargestellt. Eine Vorrichtung 52 zur Reinigung von mit Schadstoffen belasteter Luft ist im Fahrzeuginnenraum 50 angeordnet; ihr Ansaugstutzen 53 saugt Luft aus dem Fahrzeuginnenraum 50 an; so ist die Vorrichtung 52 gegen äußerliche klimatische Einflüsse geschützt.

Durch eine als Luftzuführung dienende Leitung 54 wird Reinluft 55 in den Atembereich des Fahrers transportiert.

Die Katalysator- und Chemisorptionsfilterschichten der Vorrichtung 52 sind im Fahrzeuginnenraum 50 geschützt gegen äußerliche Einflüsse angeordnet. Zur Reinlufterzeugung wird Fahrzeuginnenluft verwendet, die sich bereits den klimatischen Bedingungen im Fahrzeug angepaßt hat. Durch diese Anordnung der Vorrichtung 52 ist auch die Gewähr gegeben, daß Frischluft im erforderlichen Umfang zugeführt wird, so daß keine $CO_2$-Anreicherung durch die Ausatmung des Fahrers entstehen kann.

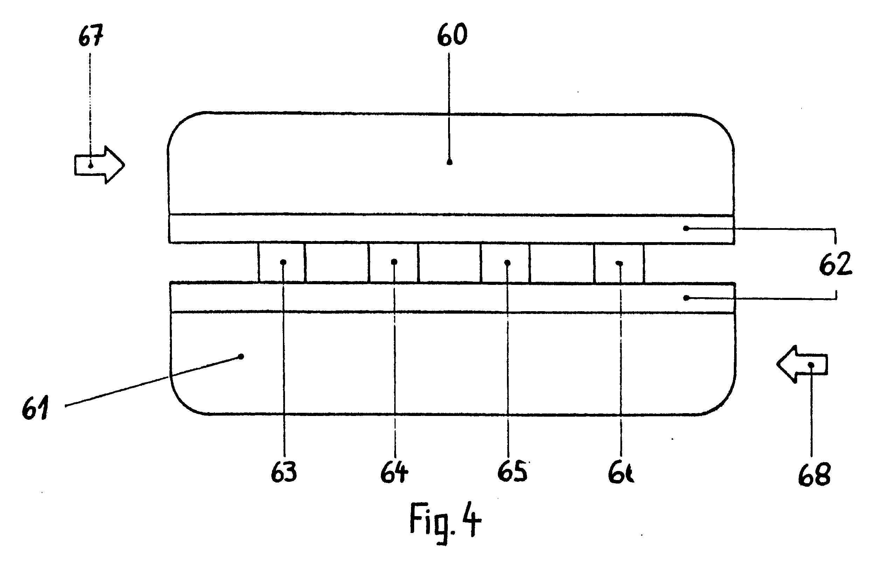

In Figur 4 ist eine Ausführungsform der Lufterwärmungs- und der Luftkühlzone 7 prinzipiell dargestellt.

Diese hat zwei Gehäusehälften 60, 61, die je mit Rippen 62 zur Führung des Luftstroms sowie zur Vergrößerung der Oberflächen der Gehäusehälften 60, 61 versehen sind. Zwischen den Gehäusehälften 60, 61 befinden sich Peltierelemente 63, 64, 65, 66, die thermisch hintereinander angeordnet sind. Der Luftstrom ist so geführt, daß dieser, wie durch den Pfeil 67 angegeben, nacheinander über die Heißseiten der Peltierelemente 63, 64, 65, 66 geführt wird und dann nach Behandlung des Luftstroms über die Kühlseiten der Peltierelemente 66, 65, 64, 63 im Gegenstrom zurückgeführt wird, wie durch den Pfeil 68 dargestellt ist.

Die Peltiervorrichtung dient hier quasi als Wärmepumpe, wobei durch die Anordnung der Peltierelemente 63, 64, 65, 66 und die Führung des Luftstromes entsprechend den Pfeilen 67, 68 sichergestellt ist, daß die wärmste Heißseite der Peltiervorrichtung und die wärmste Kaltseite der Peltiervorrichtung einander gegenüberliegend auf demselben Peltierelement 66 ausgebildet sind. Soll beispielsweise der Luftstrom von 20 Grad C auf 60 Grad C aufgeheizt werden, so streicht dieser mit seiner Anfangstemperatur über das Peltierelement 63 und erfährt eine Erwärmung von 10 Grad C, so daß er das Peltierelement 63 mit einer Temperatur von 30 Grad C verläßt, die gleichzeitig die Eingangstemperatur für das Peltierelement 64 darstellt, usw. Bei der Rückführung des Luftstroms trifft dieser beispielsweise mit einer Temperatur von 50 Grad C auf die Kaltseite des Peltierelements 66 auf und erfährt eine Abkühlung um 10 Grad C, so daß dieser mit einer Temperatur von 40 Grad C auf die Kaltseite des Peltierelements 65 gelangt usw.

## Patentansprüche

1. Vorrichtung zur Reinigung von mit Schadstoffen belasteter Luft, welche in einem Gehäuse in der angegebenen Reihenfolge in Strömungsrichtung der Luft gesehen folgende Filterschichten bzw. -stufen aufweist:

a) eine erste Natronkalkschicht (2),

b) eine erste Katalysatorschicht (3) zur partiellen Oxidation von Stickoxiden,

c) eine zweite Natronkalkschicht (9),

d) eine Sorptionsschicht (4) aus Aktivkohle,

e) eine Lufterwärmungszone (5),
f) eine zweite Katalysatorschicht (6) zur Wandlung von CO zu $CO_2$ und
g) eine Luftkühlzone (7).

2. Vorrichtung nach Anspruch 1, bei der ein Ozonisator (11) an ihre Luftzuführung zur Zuführung ozonisierter Luft (10) angeschlossen oder in ihrer Luftzuführung zur Ozonisierung der schadstoffbelasteten Luft angeordnet ist.

3. Vorrichtung nach Anspruch 1 oder 2, bei der zur Ausbildung der Lufterwärmungszone (5) und der Luftkühlzone (7) Peltierelemente (63,64,65,66) vorgesehen sind, wobei der Luftstrom thermisch nacheinander über die Heißseiten der Peltierelemente (63,64,65,66) und im Gegenstrom über deren Kaltseiten geführt ist.

4. Vorrichtung nach Anspruch 3, bei der sich die Peltierelemente (63,64,65,66) in einem gemeinsamen Gehäuse (60,61) befinden.

5. Vorrichtung nach Anspruch 4, bei der das Gehäuse (60,61) mit Rippen (62) od.dgl. versehen ist.

6. Vorrichtung nach Anspruch 4 oder 5, bei der das Gehäuse (60,61) mit Umleitvorrichtungen od.dgl. ausgerüstet ist.

7. Verwendung der Vorrichtung nach einem der Ansprüche 1 - 6 in einer Fahrerkabine eines Lastkraftwagens oder eines Autobusses, wobei ein Ansaugstutzen (53) der Vorrichtung (52) in die Fahrerkabine (51) oder den Fahrzeuginnenraum (50) des Fahrzeugs einmündet und der Austritt der Vorrichtung (52) über eine Leitung (54) mit einer Luftdusche (55) verbunden ist, die sich in der Fahrerkabine (51) im Bereich oberhalb des Kopfes des Fahrers befindet.

## Claims

1. Device for cleaning air loaded with pollutants, which comprises the following filter layers or filter stages in a casing in the stated order in the direction of flow of the air:
   a) a first soda lime layer (2);
   b) a first catalyst layer (3) for the partial oxidation of nitric oxides,
   c) a second soda lime layer (9);
   d) a sorption layer (4) of active charcoal,
   e) an air heating zone (5);
   f) a second catalyst layer (6) for transforming CO into $CO_2$ and
   g) an air cooling zone (7).

2. Device according to claim 1, wherein an ozoniser (11) is connected to its air inlet for supplying ozonized air (10) or is disposed in its air inlet for ionizing the air loaded with pollutants.

3. Device according to claims 1 or 2, wherein Peltier elements (63, 64, 65, 66) are provided for forming the air heating zone (5) and air cooling zone (7), whereby the air flow is guided successively over the hot sides of the Peltier elements (63, 64, 65, 66) and in the counterflow over their cold sides in a thermic manner.

4. Device according to claim 3, characterised in that the Peltier elements (63, 64, 65, 66) are located in a common casing (60, 61).

5. Device according to claim 4, characterised in that the casing (60, 61) is provided with ribs (62) or the like.

6. Device according to claims 4 or 5, wherein the casing (60, 61) is provided with deviating means or the like.

7. The use of the device according to any one of claims 1 to 6 in the driver's cab of a lorry or of a bus, whereby an intake stack (53) of the device (52) opens into the driver's cab (51) or the vehicle interior (50) of the vehicle and the outlet of the device (52) is connected via a duct (54) to an air shower (55) which is located in the driver's cab (51) in the area above the head of the driver.

## Revendications

1. Dispositif pour l'épuration de l'air chargé de substances polluantes qui comporte dans une enveloppe, dans l'ordre indiqué, vu dans le sens d'écoulement de l'air, les couches de filtre ou les étages de filtre suivants :
   a) une première couche de chaux sodée (2),
   b) une première couche de catalyseur (3) pour l'oxydation partielle des oxydes azotiques,
   c) une deuxième couche de chaux sodée (9),
   d) une couche d'absorption (4) constituée de charbon actif,
   e) une zone de réchauffage de l'air (5),
   f) une deuxième couche de catalyseur (6) pour la transformation du CO en $CO_2$ et
   g) une zone de refroidissement de l'air (7).

2. Dispositif selon la revendication 1, dans lequel un ozoniseur (11) est raccordé à son alimentation en air pour l'introduction d'air ozonisé (10) ou est disposé dans son alimentation en air pour ozoniser l'air chargé de substances polluantes.

3. Dispositif selon la revendication 1 ou 2, dans lequel des éléments peltier (63, 64, 65, 66) sont prévus pour former la zone de réchauffage de l'air (5) et la zone de refroidissement de l'air (7), le flux d'air passant thermiquement successivement sur les côtés chauds des éléments peltier (63, 64, 65, 66) et à contre-courant sur leurs côtés froids.

4. Dispositif selon la revendication 3, dans lequel les éléments peltier (63, 64, 65, 66) sont logés dans une enveloppe commune (60, 61).

5. Dispositif selon la revendication 4, dans lequel l'enveloppe (60, 61) est munie d'ailettes (62) ou analogues.

6. Dispositif selon la revendication 4 ou 5, dans lequel l'enveloppe (60, 61) est équipée de dispositifs de déviation ou analogues.

7. Utilisation du dispositif selon l'une des revendications 1 à 6 dans une cabine de conduite d'un camion ou d'un autobus, un conduit d'aspiration (53) du dispositif (52) débouchant dans la cabine de conduite (51) ou dans l'habitacle (50) du véhicule et la sortie du dispositif (52) étant raccordée par l'intermédiaire d'un conduit (54) à une douche à air (55), qui se trouve dans la cabine de conduite dans la région située au-dessus de la tête du conducteur.

11 ←

1

10

2,3,9,4, Fig.1
5,6,7

1

2

3

9

4

Fig. 2

Fig. 3

EP 0 050 243 B1

Fig. 4